# FASCICULE DE BREVET EUROPEEN

(11) **EP 4 447 760 B1**
(45) Date de publication et mention de la délivrance du brevet: **03.12.2025**
(21) Numéro de dépôt: 22836156.4
(22) Date de dépôt: 14.12.2022
(51) Int. Cl.: A47J 27/08, A23L 5/10, A47J 27/086

(54) **PROCÉDÉ DE CUISSON EN DEUX PHASES**
ZWEIPHASIGES KOCHVERFAHREN
TWO-PHASE COOKING METHOD

(30) Priorité: 15.12.2021 FR 2113555
(43) Date de publication de la demande: 23.10.2024
(73) Titulaire: SEB S.A., 69130 Ecully (FR)
(72) Inventeur: DOAT, Géraldine, 69134 Ecully Cedex (FR); DUJARDIN, Anaïs, 69134 Ecully Cedex (FR)
(74) Mandataire: SEB Développement
(86) Numéro de dépôt international: PCT/EP2022/085903
(87) Numéro de publication internationale: WO 2023/111044

(56) Documents cités:
- EP-A1- 3 912 521
- WO-A2-2012/056174
- CN-A- 103 989 400
- CN-B- 106 551 612
- UEBERSAX M A ET AL: "STRATEGIES AND PROCEDURES FOR PROCESSING DRY BEANS", FOOD TECHNOLOGY, INSTITUTE OF FOOD TECHNOLOGISTS, CHICAGO, IL, US, 1 September 1991 (1991-09-01), pages 104 - 108, 110/, XP000644367, ISSN: 0015-6639

## Description

### Domaine de l'invention

La présente invention concerne un procédé de cuisson comprenant deux phases de cuisson, une première phase de cuisson à pression atmosphérique et une deuxième phase de cuisson sous pression.

### Art antérieur

Il est connu d'utiliser un appareil de cuisson sous pression pour réaliser une cuisson d'un ou plusieurs aliments puis un maintien au chaud après la fin de cuisson.

Le maintien au chaud fait suite à une étape de réduction de la pression interne à une enceinte de cuisson de l'appareil de cuisson. Pour ce faire, l'appareil de cuisson comprend un mécanisme de régulation de la pression interne comprenant un canal d'échappement et un obturateur mobile entre une position ouverte dans laquelle l'enceinte de cuisson est en communication fluidique avec l'extérieur et une position fermée dans laquelle cette communication fluidique est interrompue.

Ainsi, l'obturateur mobile est amené vers sa position ouverte en fin de cuisson.

L'appareil de cuisson comprend un élément de chauffage permettant d'engendrer la pression lors de la cuisson, et le maintien au chaud en fin de cuisson.

Cette disposition donne satisfaction en ce que la cuisson sous pression permet une durée de cuisson réduite par rapport à une cuisson à pression atmosphérique.

Cependant, certains aliments comme les légumineuses nécessitent une étape préalable à la cuisson qui consiste en un trempage.

En effet, les légumineuses comprennent un tégument qui enveloppe le corps de la graine et qui limite l'hydratation du cœur. Lors de la cuisson de légumineuses on constate ainsi une gélatinisation et un gonflement de l'amidon périphérique qui empêche l'hydratation et donc la cuisson à cœur de la graine, ce qui résulte à une texture hétérogène.

L'étape de trempage a pour but de réduire l'effet de ce tégument sur l'hydratation du corps de la graine sans toutefois initier le processus de gélatinisation de l'amidon contenu dans le corps de la graine.

Typiquement, cette étape préalable de trempage peut être réalisée à pression atmosphérique dans un récipient rempli d'eau. L'inconvénient de cette technique est de nécessiter beaucoup de temps, par exemple environ 12h pour des pois chiches.

L'utilisation d'un appareil de cuisson sous pression ne présente ainsi pas réellement d'intérêt pour la cuisson de légumineuses car la durée de préparation totale correspond majoritairement à l'étape de trempage.

La cuisson sous pression raccourcit ainsi la fin de la préparation des légumineuses, mais il existe un besoin pour l'utilisateur de réduire le temps de préparation total, notamment si l'utilisateur n'a pas pensé à mettre tremper les légumineuses la veille de la cuisson.

Il est connu d'utiliser des appareils de cuisson proposant une étape de trempage avant la cuisson du riz. Le document WO 2012/056174 A2 décrit un procédé de cuisson avec une étape de trempage.

Cependant, cette étape de trempage est principalement destinée à faire baisser l'indice glycémique du riz, ce qui s'éloigne de la problématique propre aux légumineuses.

La présente invention vise à résoudre tout ou partie des inconvénients mentionnés ci-dessus.

### Exposé de l'invention

A cet effet, la présente invention concerne un procédé de cuisson de légumineuses, lesdites légumineuses comportant une graine et un tégument recouvrant le corps de la graine, ledit procédé comprenant les étapes suivantes :

disposer d'un appareil de cuisson sous pression pourvu d'une enceinte de cuisson apte à être mise sous pression et d'un mécanisme de régulation de la pression interne à l'enceinte de cuisson, le mécanisme de régulation comprenant un canal d'échappement d'une surpression de l'enceinte de cuisson et un obturateur mobile entre une position ouverte dans laquelle l'enceinte de cuisson est en communication fluidique avec l'extérieur et une position fermée dans laquelle cette communication fluidique est interrompue, le mécanisme de régulation comprenant en outre un actionneur bistable apte à déplacer et maintenir l'obturateur en position ouverte ou en position fermée,

déposer des légumineuses à l'intérieur de l'enceinte de cuisson en ouvrant puis refermant un couvercle hermétique de l'appareil de cuisson, le couvercle hermétique étant configuré pour permettre un accès à l'enceinte de cuisson, puis

réaliser une première phase de cuisson des légumineuses dans l'enceinte de cuisson de manière à détruire partiellement la cellulose constitutive du tégument et à hydrater la graine à cœur, ladite première étape de cuisson étant réalisée avec un élément de chauffage de l'appareil de cuisson en conservant le couvercle hermétique fermé, le mécanisme de régulation étant en position ouverte, et l'enceinte de cuisson étant maintenue à une température inférieure à 100°C pendant une durée comprise entre 30 min et 60 min, puis

réaliser une deuxième phase de cuisson des légumineuses dans l'enceinte de cuisson avec l'élément de chauffage en conservant le couvercle hermétique fermé, le mécanisme de régulation étant en position fermée.

Cette disposition permet d'utiliser un seul appareil, l'appareil de cuisson sous pression, pour réaliser une cuisson en deux phases. La première phase est réalisée à pression atmosphérique. En effet, le mécanisme de régulation étant en position ouverte, l'élément de chauffage ne permet pas une montée en pression mais seulement une montée en température. La première phase a pour but d'hydrater la graine à cœur pour faciliter la cuisson par la suite. Plus précisément, un trempage des graines dans de l'eau chaude (température supérieure à 60°C mais inférieure à 100°C) permet de réduire considérablement la durée de trempage totale. Ce trempage à chaud permet d'accélérer la réhydratation des graines. La durée de trempage à chaud dépend de l'épaisseur du tégument de la graine à cuire. Cette étape permet la destruction partielle de la cellulose constitutive des parois des graines et permet également une bonne hydratation homogène de l'amidon pour favoriser la gélatinisation dans l'étape suivante de cuisson. Par ailleurs, les fibres, présentes en grand quantité dans les légumineuses, ont un pouvoir de rétention d'eau important et la phase de trempage permet ainsi également d'augmenter la teneur en eau grâce à l'hydratation des fibres et de l'amidon. Enfin, l'étape de trempage empêche une gélatinisation et un gonflement de l'amidon périphérique, ce qui permet l'hydratation et donc la cuisson à cœur de la graine, ce qui résulte à une texture hétérogène.

La deuxième phase est réalisée sous pression directement suite à la première phase. Le couvercle hermétique demeure fermé tout au long de ces deux phases. Seul le mécanisme de régulation passe de la position ouverte à la position fermée.

L'utilisateur n'a ainsi aucune manipulation à faire puisque les légumineuses restent dans l'enceinte de cuisson.

Une application possible de cette cuisson en deux phases concerne particulièrement la cuisson des légumineuses. La première phase de cuisson remplace ainsi avantageusement une étape de trempage dans un récipient rempli d'eau nécessitant une douzaine d'heures.

En effet, la cuisson à pression atmosphérique remplace le trempage et permet d'obtenir des légumineuses prêtes pour la cuisson sous pression en un temps réduit.

Le procédé de cuisson en deux phases permet ainsi de réaliser une cuisson rapide qui est adaptée aux légumineuses nécessitant un trempage préalable et sans manipulation de la part de l'utilisateur.

L'enchainement des deux phases de cuisson est adapté aux légumineuses tels que : haricots et pois chiches. La première phase de cuisson a pour double objectif d'hydrater les graines et de faciliter par la suite la deuxième phase de cuisson.

La première phase permet en particulier l'élimination partielle des facteurs antinutritionnels (phytate, verbascose, raffinose, stachyose...).

Dans le présent texte, lorsque l'on évoque la disposition de plusieurs légumineuses dans l'enceinte de cuisson, une certaine quantité d'eau peut être ajoutée dans l'enceinte de cuisson avec les légumineuses.

Selon un aspect de l'invention, l'enceinte de cuisson est maintenue à une température inférieure à 100°C lors de la première phase de cuisson.

La première phase de cuisson à une température inférieure à 100°C et à pression atmosphérique permet de réaliser un trempage des légumineuses en un temps réduit par rapport à un trempage à froid.

Cette première phase de cuisson est adaptée aux céréales ou légumineuses. De préférence, l'enceinte de cuisson est maintenue à une température comprise entre 60 et 80°C et est en particulier de 75°C.

Selon un aspect de l'invention, la première phase de cuisson a une durée comprise entre 30 min et 60 min.

Le fait d'utiliser un actionneur bistable pour disposer et maintenir l'obturateur en position ouverte permet de conserver sa position ouverte sans qu'il soit nécessaire de lui fournir de l'énergie et de réaliser une première phase de cuisson à pression atmosphérique d'une durée relativement courte en comparaison à la durée nécessaire avec un trempage à température ambiante.

Si l'on compare à un trempage dans un récipient à pression et température ambiantes, le temps de trempage est réduit d'un facteur supérieur à 10. Il s'avère en effet, que le maintien à une température relativement élevée pendant une période déterminée est équivalent à un trempage de plusieurs heures.

La préparation et la cuisson des légumineuses est ainsi substantiellement plus courte : une recette de cuisine comprenant les légumineuses peut être commencée le jour même, peu avant le repas.

De préférence, la première phase de cuisson a une durée comprise entre 30 min et 50 min et est en particulier d'une durée de 40 min.

Selon un aspect de l'invention, la deuxième phase de cuisson est réalisée avec une surpression de l'enceinte de cuisson par rapport à l'extérieur comprise entre 30 et 120 kPa.

La deuxième phase de cuisson est comparable à une phase de cuisson habituelle pour un appareil de cuisson sous pression. La surpression de l'enceinte de cuisson par rapport à l'extérieur est régulée par une température de l'enceinte de cuisson obtenue grâce à l'élément de chauffage.

L'élément de chauffage est configuré pour réguler la surpression de la deuxième phase de cuisson. En particulier, la deuxième phase de cuisson est régulée à une surpression d'une valeur déterminée. La valeur déterminée est par exemple l'une des valeurs suivantes : 40, 70 ou 110 kPa.

Selon un aspect de l'invention, la deuxième phase de cuisson a une durée déterminée, ladite durée déterminée étant comprise entre 5 et 35min.

Ainsi, le procédé de cuisson en deux phases permet de réduire le temps de préparation global de 12h + 20 min pour des haricots à un trempage à 75°C de 40min + une cuisson sous pression à 70kPa de 20min, soit un temps total de 55min.

Selon un aspect de l'invention, l'actionneur bistable comprend un électroaimant et une partie mobile apte à être déplacée par l'électroaimant entre une première position de repos et une deuxième position de repos de manière à déplacer l'obturateur depuis sa position fermée vers sa position ouverte et réciproquement et à le maintenir dans l'une ou l'autre de ces deux positions.

De préférence, l'électroaimant est une bobine présentant une ouverture centrale et axiale de passage pour la partie mobile qui est ferromagnétique.

Selon un aspect de l'invention, l'actionneur bistable comprend un premier élément de maintien de la partie mobile dans sa première position de repos et un deuxième élément de maintien de la partie mobile dans sa deuxième position de repos de sorte que la partie mobile reste dans sa première position de repos ou respectivement dans sa deuxième position de repos en l'absence d'alimentation de l'électroaimant.

Cette disposition limite la consommation électrique lors de la première phase de cuisson. Par rapport à un actionneur non bistable qui doit être maintenu dans une position actionnée par l'électroaimant alimenté, il est possible de prolonger la première phase de cuisson.

Il apparait que l'actionneur bistable joue un rôle important dans la réalisation du procédé car il permet de réaliser une cuisson de l'ordre d'une heure à pression atmosphérique avec un appareil de cuisson sous pression.

Selon un aspect de l'invention, le premier élément de maintien et le deuxième élément de maintien sont respectivement un ressort ou un aimant permanent ou inversement.

Selon un aspect de l'invention, l'obturateur est une bille de décompression disposée dans un siège ménagé dans le canal d'échappement du mécanisme de régulation de la pression interne de sorte à fermer le canal d'échappement lorsque l'obturateur est dans sa position fermée, la bille de décompression étant mobile sous l'effet de l'actionneur bistable ou d'une surpression de l'enceinte de cuisson supérieure à une pression maximale prédéterminée de sécurité.

La bille de décompression peut être déplacée par l'actionneur bistable mais également par une surpression à l'intérieur de l'enceinte de cuisson. Il s'agit d'une mesure de sécurité pour éviter une montée trop importante en pression.

Selon un aspect de l'invention, le couvercle hermétique de l'appareil de cuisson est configuré pour être verrouillé de sorte à empêcher une ouverture intempestive par un utilisateur du début de la première phase de cuisson à la fin de la deuxième phase de cuisson.

Cette disposition sécurise les deux phases de cuisson ainsi que le passage de la première phase de cuisson à la deuxième phase de cuisson qui est réalisé sans manipulation de l'utilisateur.

Selon un aspect de l'invention, l'appareil de cuisson comprend un ensemble de commande électronique configuré pour commander l'élément de chauffage et l'actionneur bistable.

L'ensemble de commande électronique permet ainsi une automatisation de procédé de cuisson en deux étapes. Ainsi, l'utilisateur dispose les légumineuses dans l'enceinte de cuisson, referme le couvercle hermétique, puis l'ensemble de commande gère la première phase de cuisson, le passage de l'obturateur en position fermée via l'actionnement de l'actionneur bistable et enfin la deuxième phase de cuisson sans intervention de l'utilisateur.

De préférence, l'ensemble de commande électronique est configuré pour piloter le verrouillage et le déverrouillage du couvercle hermétique. Selon un aspect de l'invention, l'ensemble de commande électronique comprend une interface utilisateur configurée pour le lancement du procédé de cuisson en deux phases.

De préférence, l'ensemble de commande électronique est également agencé pour échanger des données suivant un protocole de communication sans fil, en particulier pour émettre une notification d'avancée du procédé de cuisson en deux phases ou recevoir un ordre de fonctionnement externe. Le pilotage des temps de cuisson ainsi que le suivi de la cuisson peuvent être réalisés depuis une application mobile.

L'appareil de cuisson comprend en outre une alimentation secteur apte à âtre raccordée à une prise de courant pour l'alimentation électrique.

Selon un aspect de l'invention, l'étape de réalisation de la deuxième phase de cuisson est suivie par une étape de décompression dans laquelle l'obturateur du mécanisme de régulation de la pression interne est disposé en position ouverte de sorte à amener l'enceinte de cuisson à la pression ambiante.

Durant cette étape de décompression, le couvercle hermétique reste verrouillé.

Selon un aspect de l'invention, l'étape de décompression est suivie par une étape de maintien au chaud des légumineuses dans l'enceinte de cuisson, l'obturateur du mécanisme de régulation de la pression interne étant en position ouverte et le couvercle hermétique étant déverrouillé de sorte à pouvoir être ouvert par un utilisateur.

Selon un aspect de l'invention, l'appareil de cuisson comprend en outre un élément résistif interne à l'enceinte de cuisson fermée, l'élément résistif étant configuré pour apporter une source de chaleur additionnelle lors de la deuxième phase de cuisson.

Cette disposition permet d'accélérer la mise sous pression lors la deuxième phase de cuisson. Le fait que l'élément de chauffage et l'élément résistif fonctionnent en même temps apporte une chaleur importante impliquant une montée en température et donc en pression plus rapide. L'avantage est la réduction du temps de mise sous pression et ainsi la réduction du temps de réalisation d'une cuisson complète avec l'appareil de préparation culinaire.

Un mode de réalisation de l'élément résistif est décrit ci-dessous.

L'élément résistif est disposé à l'intérieur de l'enceinte de cuisson en position fermée. L'élément résistif est disposé en regard d'un fond de l'enceinte de cuisson, le fond étant adapté pour recevoir les légumineuses.

L'élément résistif comprend un serpentin alimenté en courant de sorte à chauffer, notamment par rayonnement et convection. Le serpentin est une résistance blindée, de préférence d'une puissance de l'ordre de 500 W.

L'élément résistif comprend également un réflecteur ou plaque interne rayonnante disposée à proximité du serpentin de sorte à répartir la chaleur émise par rayonnement dans l'enceinte de cuisson.

Le réflecteur ou plaque rayonnante a pour rôle d'éviter la création de point chaud à l'intérieur de l'enceinte de cuisson et à répartir la chaleur. Le réflecteur est selon un exemple de réalisation en métal. Le réflecteur n'est pas alimenté électriquement mais il agit tout de même comme source de chaleur en emmagasinant puis restituant la chaleur du serpentin.

Selon une possibilité, le couvercle hermétique comprend un pare-vapeur agencé pour maintenir la pression la pression à l'intérieur de l'enceinte de cuisson. L'élément résistif peut être rapporté sur le pare-vapeur ou directement sur le corps du couvercle hermétique.

Selon cette configuration, l'élément de chauffage est disposé sous et/ou autour de l'enceinte de cuisson. Ainsi la chaleur de l'élément résistif et de l'élément de chauffage entoure les légumineuses lors de la cuisson.

Indépendamment de la présente invention, le présent texte divulgue un procédé de mise en pression accéléré.

Le procédé de mise en pression accéléré comprend une première étape de disposition de légumineuses dans l'enceinte de cuisson d'un appareil de cuisson tel que décrit ci-dessus incluant un élément résistif.

Une deuxième étape consiste à la fermeture et au verrouillage du couvercle hermétique, le mécanisme de régulation de la pression interne étant fermé.

Une troisième étape consiste en un chauffage simultané de l'élément de chauffage et de l'élément résistif jusqu'à l'obtention d'une pression et d'une température interne déterminée.

Cette montée rapide en chaleur constitue ainsi un procédé en tant que tel.

Indépendamment de la présente invention, le présent texte divulgue également un procédé de cuisson par pression puis rayonnement utilisant un appareil de cuisson similaire à celui décrit ci-dessus comprenant un élément résistif disposé en regard du fond de l'enceinte de cuisson piloté par l'ensemble de commande électronique.

Le procédé de cuisson par pression puis rayonnement comprend une première étape de cuisson sous pression dans laquelle l'obturateur du mécanisme de régulation de la pression interne est en position fermée de sorte à établir dans l'enceinte de cuisson une pression en fonction de la température engendrée par l'élément de chauffage.

Le procédé de cuisson par pression puis rayonnement comprend ensuite une étape de décompression dans laquelle l'obturateur du mécanisme de régulation de la pression interne passe en position ouverte de sorte à obtenir une pression interne à l'enceinte de cuisson égale à la pression ambiante.

Le procédé de cuisson par pression puis rayonnement comprend ensuite une étape de cuisson par rayonnement, dans lequel l'élément résistif interne est activé de sorte à produire une chaleur apte à porter une face externe des légumineuses situées face à l'élément résistif à une température d'au moins 140°C.

Ce procédé est particulièrement adapté à la cuisson de plats nécessitant un dorage. En effet, le dorage nécessite d'exposer la surface des légumineuses à une forte température. Ce procédé est adapté à un plat comme une viande, seule ou en sauce, ou un plat à gratiner.

De plus, la combinaison d'une cuisson sous pression puis par rayonnement permet d'obtenir un résultat satisfaisant du point de vue du goût. En effet, cela permet de cuire rapidement des ingrédients à cœur tout en assurant la coloration et la croustillance grâce à la phase de rayonnement.

Par ailleurs, le temps total de cuisson est également plus court qu'une cuisson au four. A titre d'exemple, un gratin dauphinois peut être réalisé en 24 min avec ce procédé tandis qu'une cuisson au four classique dure 1h.

De manière optionnelle, le procédé de cuisson par pression puis rayonnement est caractérisé par le fait que le couvercle hermétique reste fermé et verrouillé entre le début de la cuisson par pression et la fin de la cuisson par rayonnement.

Egalement, l'ensemble de commande électronique pilote l'enchainement des étapes de cuisson par pression puis par rayonnement en définissant les puissances et durées de ces étapes en fonction des légumineuses à cuire.

Les différents aspects définis ci-dessus non incompatibles peuvent être combinés.

### Brève description des figures

L'invention sera mieux comprise à l'aide de la description détaillée qui est exposée ci-dessous en regard des dessins annexés.
[Fig.1] est une vue en coupe schématique d'un appareil de cuisson avec un mécanisme de régulation de la pression interne en position ouverte.
[Fig.2] est une vue en en coupe schématique de l'appareil de cuisson avec le mécanisme de régulation de la pression interne en position fermée.
[Fig.3] est une vue en coupe schématique du mécanisme de régulation de la pression interne.
[Fig.4] est une vue de dessus en transparence d'un couvercle hermétique de l'appareil de cuisson.
[Fig.5] est une vue en coupe schématique de l'appareil de cuisson équipé d'un élément résistif.
[Fig.6] est une vue de dessous du couvercle hermétique sur lequel est installé un élément de chauffage.
[Fig.7] est une vue de dessous du couvercle hermétique de la [Fig.6] comprenant en outre un pare-vapeur et un réflecteur.
[Fig.8] est un schéma représentant les étapes d'un procédé de cuisson en deux phases.

### Description en référence aux figures

Dans la description détaillée qui va suivre des figures définies ci-dessus, les mêmes éléments ou les éléments remplissant des fonctions identiques pourront conserver les mêmes références de manière à simplifier la compréhension de l'invention.

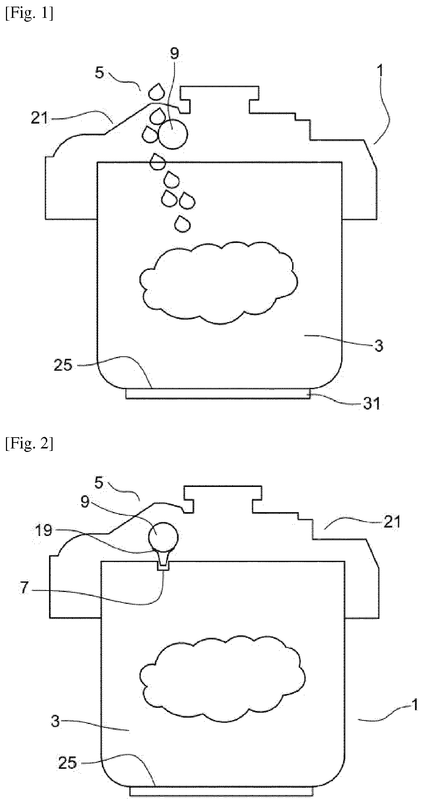

Comme illustré aux figures 1 à 4 et 8, un procédé de cuisson comprend les étapes décrites ci-dessous.

Une étape E1 consiste à disposer d'un appareil de cuisson 1 sous pression pourvu d'une enceinte de cuisson 3 apte à être mise sous pression et d'un mécanisme de régulation 5 de la pression interne à l'enceinte de cuisson 3.

Le mécanisme de régulation 5 comprend un canal d'échappement 7 d'une surpression de l'enceinte de cuisson 3 et un obturateur 9 mobile entre une position ouverte dans laquelle l'enceinte de cuisson 3 est en communication fluidique avec l'extérieur et une position fermée dans laquelle cette communication fluidique est interrompue.

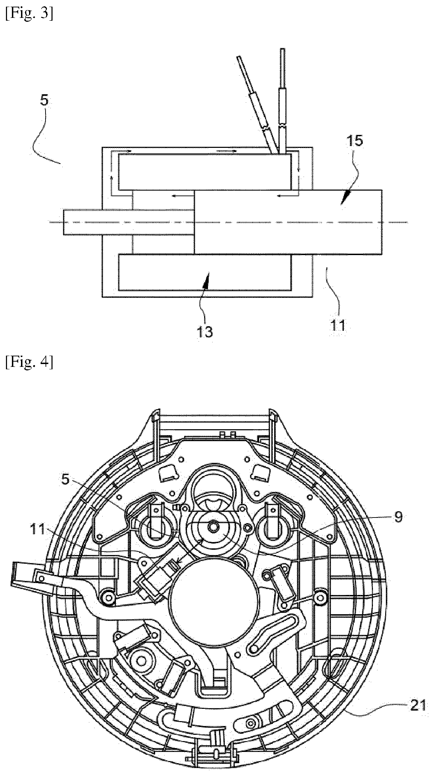

Comme illustré aux figures 3 et 4, le mécanisme de régulation 5 comprend en outre un actionneur bistable 11 apte à déplacer et maintenir l'obturateur 9 en position ouverte ou en position fermée.

L'actionneur bistable 11 comprend un électroaimant 13 et une partie mobile 15 apte à être déplacée par l'électroaimant 13 entre une première position de repos et une deuxième position de repos de manière à déplacer l'obturateur 9 depuis sa position fermée vers sa position ouverte et réciproquement et à le maintenir dans l'une ou l'autre de ces deux positions.

L'électroaimant est une bobine présentant une ouverture centrale et axiale de passage pour la partie mobile 15 qui est ferromagnétique.

L'actionneur bistable 11 comprend un premier élément de maintien de la partie mobile 15 dans sa première position de repos et un deuxième élément de maintien de la partie mobile dans sa deuxième position de repos de sorte que la partie mobile 15 reste dans sa première position de repos ou respectivement dans sa deuxième position de repos en l'absence d'alimentation de l'électroaimant 13.

Le premier élément de maintien et le deuxième élément de maintien sont respectivement un ressort ou un aimant permanent ou inversement.

L'obturateur 9 est une bille de décompression disposée dans un siège 19 ménagé dans le canal d'échappement 7 du mécanisme de régulation 5 de la pression interne de sorte à fermer le canal d'échappement 7 lorsque l'obturateur 9 est dans sa position fermée.

La bille de décompression est mobile sous l'effet de l'actionneur bistable 11 ou d'une surpression de l'enceinte de cuisson 3 supérieure à une pression maximale prédéterminée de sécurité.

La bille de décompression peut être déplacée par l'actionneur bistable 11 mais également par une surpression à l'intérieur de l'enceinte de cuisson 3. Il s'agit d'une mesure de sécurité pour éviter une montée trop importante en pression.

Un couvercle hermétique 21 de l'appareil de cuisson 1 est configuré pour être verrouillé de sorte à empêcher une ouverture intempestive par un utilisateur.

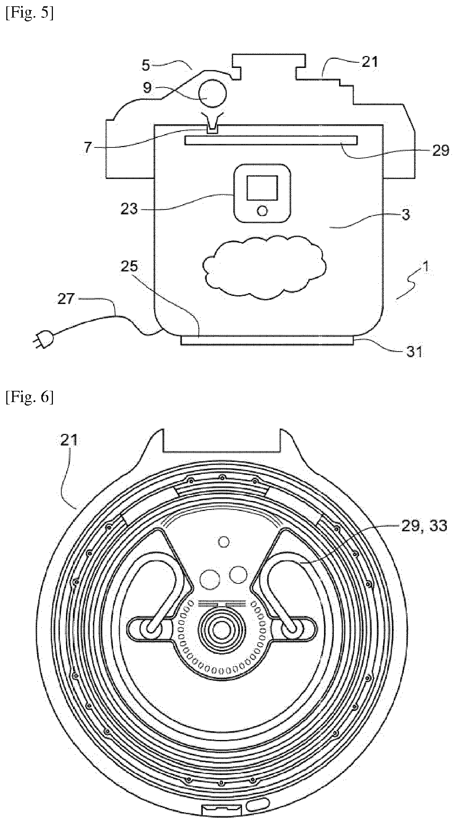

Comme illustré à la [Fig.5], l'appareil de cuisson 1 comprend un ensemble de commande électronique 23 configuré pour commander un élément de chauffage 25 de l'appareil de cuisson 1 et l'actionneur bistable 11.

L'ensemble de commande électronique 23 est configuré pour piloter le verrouillage et le déverrouillage du couvercle hermétique 21. L'ensemble de commande électronique 23 comprend une interface utilisateur configurée pour le lancement du procédé de cuisson.

L'ensemble de commande électronique 23 est également agencé pour échanger des données suivant un protocole de communication sans fil, en particulier pour émettre une notification d'avancée du procédé de cuisson en deux phases ou recevoir un ordre de fonctionnement externe. Le pilotage des temps de cuisson ainsi que le suivi de la cuisson peuvent être réalisés depuis une application mobile.

L'appareil de cuisson 1 comprend en outre une alimentation secteur 27 apte à âtre raccordée à une prise de courant pour l'alimentation électrique.

Une étape E2 consiste ensuite à déposer des légumineuses à l'intérieur de l'enceinte de cuisson 3 en ouvrant puis refermant le couvercle hermétique 21 de l'appareil de cuisson 1, le couvercle hermétique 21 étant configuré pour permettre un accès à l'enceinte de cuisson 3. Une certaine quantité d'eau peut être ajoutée dans l'enceinte de cuisson 3 avec les légumineuses.

Suite à cela une étape E3 consiste à réaliser une première phase de cuisson des légumineuses dans l'enceinte de cuisson 3 avec l'élément de chauffage 25 de l'appareil de cuisson 1 en conservant le couvercle hermétique 21 fermé, le mécanisme de régulation 5 étant en position ouverte.

L'enceinte de cuisson 3 est maintenue à une température inférieure à 100°C lors de la première phase de cuisson. La première phase de cuisson à une température inférieure à 100°C et à pression atmosphérique permet de réaliser un trempage des légumineuses en un temps réduit par rapport à un trempage à froid.

Une application possible de cette cuisson concerne particulièrement la cuisson des légumineuses. La première phase de cuisson remplace ainsi avantageusement une étape de trempage dans un récipient rempli d'eau nécessitant une douzaine d'heures.

En effet, la cuisson à pression atmosphérique remplace le trempage et permet d'obtenir des légumineuses prêtes pour la cuisson sous pression en un temps réduit.

L'enceinte de cuisson 3 est maintenue à une température comprise entre 60 et 80°C et est en particulier de 75°C.

La première phase de cuisson a une durée comprise entre 30 min et 60 min. De préférence, la première phase de cuisson a une durée comprise entre 30 min et 50 min et est en particulier d'une durée de 40 min.

Après, une étape E4 consiste à réaliser une deuxième phase de cuisson des légumineuses dans l'enceinte de cuisson 3 avec l'élément de chauffage 25 en conservant le couvercle hermétique 21 fermé, le mécanisme de régulation 5 étant en position fermée.

La deuxième phase de cuisson est réalisée avec une surpression de l'enceinte de cuisson par rapport à l'extérieur comprise entre 30 et 120 kPa.

La deuxième phase de cuisson est comparable à une phase de cuisson habituelle pour un appareil de cuisson 1 sous pression. La surpression de l'enceinte de cuisson 3 par rapport à l'extérieur est régulée par une température de l'enceinte de cuisson 3 obtenue grâce à l'élément de chauffage 25.

L'élément de chauffage 25 est configuré pour réguler la surpression de la deuxième phase de cuisson. En particulier, la deuxième phase de cuisson est régulée à une surpression d'une valeur déterminée. La valeur déterminée est par exemple l'une des valeurs suivantes : 40, 70 ou 110 kPa.

La deuxième phase de cuisson a une durée déterminée, ladite durée déterminée étant comprise entre 5 et 35min.

L'étape E4 de réalisation de la deuxième phase de cuisson est suivie par une étape E5 de décompression dans laquelle l'obturateur 9 du mécanisme de régulation 5 de la pression interne est disposé en position ouverte de sorte à amener l'enceinte de cuisson 3 à la pression ambiante.

Durant cette étape E5 de décompression, le couvercle hermétique 21 reste verrouillé.

L'étape E5 de décompression est suivie par une étape E6 de maintien au chaud des légumineuses dans l'enceinte de cuisson 3, l'obturateur 9 du mécanisme de régulation 5 de la pression interne étant en position ouverte et le couvercle hermétique 21 étant déverrouillé de sorte à pouvoir être ouvert par un utilisateur.

Comme illustré aux figures 5 à 7, l'appareil de cuisson 1 peut en outre comprendre un élément résistif 29 interne à l'enceinte de cuisson 3 fermée, l'élément résistif 29 étant configuré pour apporter une source de chaleur additionnelle lors de la deuxième phase de cuisson.

Cette disposition permet d'accélérer la mise sous pression lors de la deuxième phase de cuisson. Le fait que l'élément de chauffage 25 et l'élément résistif 29 fonctionnent en même temps apporte une chaleur importante impliquant une montée en température et donc en pression plus rapide.

L'élément résistif 29 est disposé à l'intérieur de l'enceinte de cuisson 3 en position fermée. L'élément résistif 29 est disposé en regard d'un fond 31 de l'enceinte de cuisson 3, le fond 31 étant adapté pour recevoir les légumineuses.

L'élément résistif 29 comprend un serpentin 33 alimenté en courant de sorte à chauffer, notamment par rayonnement et convection. Le serpentin 33 est une résistance blindée, de préférence d'une puissance de l'ordre de 500 W.

L'élément résistif 29 comprend également un réflecteur 35 ou plaque interne rayonnante disposée à proximité du serpentin 33 de sorte à répartir la chaleur émise par rayonnement dans l'enceinte de cuisson 3.

Le réflecteur 35 ou plaque rayonnante a pour rôle d'éviter la création de point chaud à l'intérieur de l'enceinte de cuisson 3 et à répartir la chaleur. Le réflecteur 35 est selon un exemple de réalisation en métal. Le réflecteur 35 n'est pas alimenté électriquement mais il agit tout de même comme source de chaleur en emmagasinant puis restituant la chaleur du serpentin 33.

Selon une possibilité, le couvercle hermétique 21 comprend un pare-vapeur 37 agencé pour maintenir la pression la pression à l'intérieur de l'enceinte de cuisson 3.

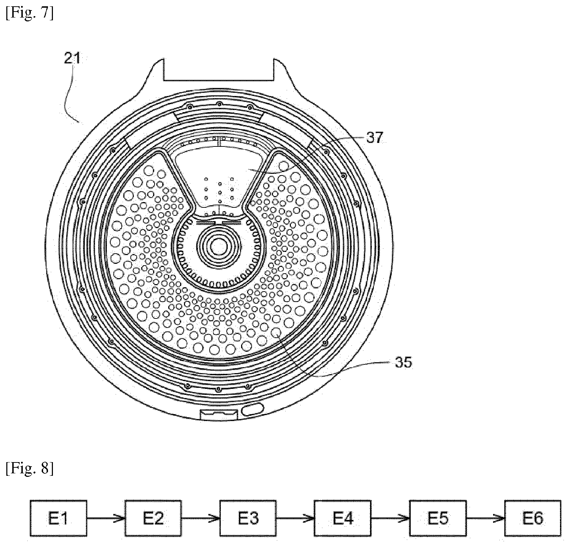

Le pare-vapeur 37 et le réflecteur 35 sont visibles à la figures 7 et ont été retirés de la [Fig.6] pour permettre de voir le serpentin 33.

Selon cette configuration, l'élément de chauffage 25 est disposé sous de l'enceinte de cuisson 3. Ainsi, la chaleur de l'élément résistif 29 et de l'élément de chauffage 25 entoure les légumineuses lors de la cuisson sans que l'utilisateur n'ait ainsi aucune manipulation à faire puisque les légumineuses restent dans l'enceinte de cuisson 3.

Indépendamment de la présente invention, le présent texte divulgue un procédé de mise en pression accéléré réalisé avec l'appareil de cuisson 1 décrit plus haut.

Le procédé de mise en pression accéléré comprend une première étape de disposition de légumineuses dans l'enceinte de cuisson 3 d'un appareil de cuisson tel que décrit ci-dessus incluant un élément résistif 29.

Une deuxième étape consiste à la fermeture et au verrouillage du couvercle hermétique 21, le mécanisme de régulation 5 de la pression interne étant fermé.

Une troisième étape consiste en un chauffage simultané de l'élément de chauffage 25 et de l'élément résistif 29 jusqu'à l'obtention d'une pression et d'une température interne déterminée.

Cette montée rapide en chaleur constitue ainsi un procédé en tant que tel.

Indépendamment de la présente invention, le présent texte divulgue également un procédé de cuisson par pression puis rayonnement utilisant un appareil de cuisson 1 similaire à celui décrit ci-dessus comprenant un élément résistif 29 disposé en regard du fond 31 de l'enceinte de cuisson 3 piloté par l'ensemble de commande électronique 23.

Le procédé de cuisson par pression puis rayonnement comprend une première étape de cuisson sous pression dans laquelle l'obturateur 9 du mécanisme de régulation 5 de la pression interne est en position fermée de sorte à établir dans l'enceinte de cuisson 3 une pression en fonction de la température engendrée par l'élément de chauffage 25.

Le procédé de cuisson par pression puis rayonnement comprend ensuite une étape de décompression dans laquelle l'obturateur 9 du mécanisme de régulation 5 de la pression interne passe en position ouverte de sorte à obtenir une pression interne à l'enceinte de cuisson 3 égale à la pression ambiante.

Le procédé de cuisson par pression puis rayonnement comprend ensuite une étape de cuisson par rayonnement, dans lequel l'élément résistif 29 interne est activé de sorte à produire une chaleur apte à porter une face externe des légumineuses situées face à l'élément résistif 29 à une température d'au moins 140°C.

Ce procédé est particulièrement adapté à la cuisson de plats nécessitant un dorage. En effet, le dorage nécessite d'exposer la surface des légumineuses à une forte température. Ce procédé est adapté à un plat comme une viande, seule ou en sauce, ou un plat à gratiner.

De plus, la combinaison d'une cuisson sous pression puis par rayonnement permet d'obtenir un résultat satisfaisant du point de vue du goût. En effet, cela permet de cuire rapidement des ingrédients à cœur tout en assurant la coloration et la croustillance grâce à la phase de rayonnement.

Par ailleurs, le temps total de cuisson est également plus court qu'une cuisson au four. A titre d'exemple, un gratin dauphinois peut être réalisé en 24 min avec ce procédé tandis qu'une cuisson au four classique dure 1h.

De manière optionnelle, le procédé de cuisson par pression puis rayonnement est caractérisé par le fait que le couvercle hermétique 21 reste fermé et verrouillé entre le début de la cuisson par pression et la fin de la cuisson par rayonnement.

Également, l'ensemble commande électronique 23 pilote l'enchainement des étapes de cuisson par pression puis par rayonnement en définissant les puissances et durées de ces étapes en fonction des légumineuses à cuire.

Comme il va de soi, l'invention ne se limite pas à la seule forme d'exécution décrite ci-dessus à titre d'exemple, elle en embrasse au contraire toutes les variantes de réalisation couvertes par les revendications.

## Revendications

1. Procédé de cuisson de légumineuses, lesdites légumineuses comportant une graine et un tégument recouvrant le corps de la graine, **caractérisé en ce que** ledit procédé comprend les étapes suivantes :
- (E1) disposer d'un appareil de cuisson (1) sous pression pourvu d'une enceinte de cuisson (3) apte à être mise sous pression et d'un mécanisme de régulation (5) de la pression interne à l'enceinte de cuisson (3), le mécanisme de régulation (5) comprenant un canal d'échappement (7) d'une surpression de l'enceinte de cuisson (3) et un obturateur (9) mobile entre une position ouverte dans laquelle l'enceinte de cuisson (3) est en communication fluidique avec l'extérieur et une position fermée dans laquelle cette communication fluidique est interrompue, le mécanisme de régulation (5) comprenant en outre un actionneur bistable (11) apte à déplacer et maintenir l'obturateur (9) en position ouverte ou en position fermée,
- (E2) déposer des légumineuses à l'intérieur de l'enceinte de cuisson (3) en ouvrant puis refermant un couvercle hermétique (21) de l'appareil de cuisson (1), le couvercle hermétique (21) étant configuré pour permettre un accès à l'enceinte de cuisson (3), puis
- (E3) réaliser une première phase de cuisson des légumineuses dans l'enceinte de cuisson (3) avec un élément de chauffage (25) de l'appareil de cuisson (1) en conservant le couvercle hermétique (21) fermé, le mécanisme de régulation (5) étant en position ouverte, et l'enceinte de cuisson (3) étant maintenue à une température inférieure à 100°C pendant une durée comprise entre 30 min et 60 min puis
- (E4) réaliser une deuxième phase de cuisson des légumineuses dans l'enceinte de cuisson (5) avec l'élément de chauffage (25) en conservant le couvercle hermétique (21) fermé, le mécanisme de régulation (5) étant en position fermée.

2. Procédé de cuisson selon la revendication 1, dans lequel la deuxième phase de cuisson est réalisée avec une surpression de l'enceinte de cuisson (3) par rapport à l'extérieur comprise entre 30 et 120 kPa.

3. Procédé de cuisson selon l'une des revendications 1 ou 2, dans lequel l'actionneur bistable (11) comprend un électroaimant (13) et une partie mobile (15) apte à être déplacée par l'électroaimant (13) entre une première position de repos et une deuxième position de repos de manière à déplacer l'obturateur (9) depuis sa position fermée vers sa position ouverte et réciproquement et à le maintenir dans l'une ou l'autre de ces deux positions.

4. Procédé de cuisson selon la revendication 3, dans lequel l'actionneur bistable (11) comprend un premier élément de maintien de la partie mobile (15) dans sa première position de repos et un deuxième élément de maintien de la partie mobile (15) dans sa deuxième position de repos de sorte que la partie mobile (15) reste dans sa première position de repos ou respectivement dans sa deuxième position de repos en l'absence d'alimentation de l'électroaimant (13).

5. Procédé de cuisson selon l'une des revendications 1 à 4, dans lequel l'obturateur (9) est une bille de décompression disposée dans un siège (19) ménagé dans le canal d'échappement (7) du mécanisme de régulation (5) de la pression interne de sorte à fermer le canal d'échappement (7) lorsque l'obturateur (9) est dans sa position fermée, la bille de décompression étant mobile sous l'effet de l'actionneur bistable (11) ou d'une surpression de l'enceinte de cuisson (3) supérieure à une pression maximale prédéterminée de sécurité.

6. Procédé de cuisson selon l'une des revendications 1 à 5, dans lequel le couvercle hermétique (21) de l'appareil de cuisson (1) est configuré pour être verrouillé de sorte à empêcher une ouverture intempestive par un utilisateur du début de la première phase de cuisson à la fin de la deuxième phase de cuisson.

7. Procédé de cuisson selon l'une des revendications 1 à 6, dans lequel l'appareil de cuisson (1) comprend un ensemble de commande électronique (23) configuré pour commander l'élément de chauffage (25) et l'actionneur bistable (11).

8. Procédé de cuisson selon l'une des revendications 1 à 7, dans lequel l'étape de réalisation de la deuxième phase de cuisson est suivie par une étape (E5) de décompression dans laquelle l'obturateur (9) du mécanisme de régulation (5) de la pression interne est disposé en position ouverte de sorte à amener l'enceinte de cuisson (3) à la pression ambiante.

9. Procédé de cuisson selon la revendication 8, dans lequel l'étape (E5) de décompression est suivie par une étape (E6) de maintien au chaud des légumineuses dans l'enceinte de cuisson (3), l'obturateur (9) du mécanisme de régulation (5) de la pression interne étant en position ouverte et le couvercle hermétique (21) étant déverrouillé de sorte à pouvoir être ouvert par un utilisateur.

10. Procédé de cuisson selon l'une des revendications 1 à 9, dans lequel l'appareil de cuisson (1) comprend en outre un élément résistif (29) interne à l'enceinte de cuisson (3) fermée, l'élément résistif (29) étant configuré pour apporter une source de chaleur additionnelle lors de la deuxième phase de cuisson.

## Patentansprüche

1. Verfahren zum Kochen von Hülsenfrüchten, wobei die Hülsenfrüchte ein Korn und ein Integument umfassen, das den Körper des Korns bedeckt, **dadurch gekennzeichnet, dass** das Verfahren die folgenden Schritte beinhaltet:
- (E1) Anordnen einer Kocheinrichtung (1) unter Druck, die mit einem Kochbehälter (3), der in der Lage ist, mit Druck beaufschlagt zu werden, und einem Regulierungsmechanismus (5) des internen Drucks in dem Kochbehälter (3) versehen ist, wobei der Regulierungsmechanismus (5) einen Auslasskanal (7) eines Überdrucks des Kochbehälters (3) und einen Verschluss (9) beinhaltet, der zwischen einer offenen Position, in der der Kochbehälter (3) in strömungstechnischer Kommunikation mit der Außenseite vorliegt, und einer geschlossenen Position beweglich ist, in der diese strömungstechnische Kommunikation unterbrochen ist, wobei der Regulierungsmechanismus (5) ferner eine bistabile Betätigungsvorrichtung (11) beinhaltet, die in der Lage ist, den Verschluss (9) in die offene Position oder in die geschlossene Position zu verschieben und dort zu halten,
- (E2) Deponieren von Hülsenfrüchten in das Innere des Kochbehälters (3), indem ein hermetischer Deckel (21) der Kocheinrichtung (1) geöffnet und danach geschlossen wird, wobei der hermetische Deckel (21) konfiguriert ist, um Zugang zu dem Kochbehälter (3) zu erlauben, danach
- (E3) Durchführen einer ersten Kochphase der Hülsenfrüchte in dem Kochbehälter (3) mit einem Erwärmungselement (25) der Kocheinrichtung (1), während der hermetische Deckel (21) geschlossen gehalten wird, wobei der Regulierungsmechanismus (5) in der offenen Position vorliegt und der Kochbehälter (3) während einer Dauer zwischen 30 min und 60 min bei einer Temperatur unter 100 °C gehalten wird, danach
- (E4) Durchführen einer zweiten Kochphase der Hülsenfrüchte in dem Kochbehälter (5) mit einem Erwärmungselement (25), während der hermetische Deckel (21) geschlossen gehalten wird, wobei der Regulierungsmechanismus (5) in der geschlossenen Position vorliegt.

2. Verfahren zum Kochen nach Anspruch 1, wobei die zweite Kochphase mit einem Überdruck des Kochbehälters (3) in Bezug auf die Außenseite zwischen 30 und 120 kPa durchgeführt wird.

3. Verfahren zum Kochen nach einem der Ansprüche 1 oder 2, wobei die bistabile Betätigungsvorrichtung (11) einen Elektromagneten (13) und ein bewegliches Teil (15) beinhaltet, das in der Lage ist, von dem Elektromagneten (13) zwischen einer ersten Ruheposition und einer zweiten Ruheposition derart verschoben zu werden, um den Verschluss (9) aus seiner geschlossenen Position in Richtung seiner offenen Position und umgekehrt zu verschieben, und um ihn in der einen oder der anderen dieser zwei Positionen zu halten.

4. Verfahren zum Kochen nach Anspruch 3, wobei die bistabile Betätigungsvorrichtung (11) ein erstes Element zum Halten des beweglichen Teils (15) in seiner ersten Ruheposition und ein zweites Element zum Halten des beweglichen Teils (15) in seiner zweiten Ruheposition beinhaltet, sodass das bewegliche Teil (15) bei Abwesenheit von Versorgung des Elektromagneten (13) in seiner ersten Ruheposition oder jeweils in seiner zweiten Ruheposition bleibt.

5. Verfahren zum Kochen nach einem der Ansprüche 1 bis 4, wobei der Verschluss (9) eine in einem Sitz (19) angeordnete Druckentlastungskugel ist, die in dem Auslasskanal (7) des Regulierungsmechanismus (5) des internen Drucks so angeordnet ist, um den Auslasskanal (7) zu schließen, wenn der Verschluss (9) in seiner geschlossenen Position vorliegt, wobei die Druckentlastungskugel unter Einwirkung der bistabilen Betätigungsvorrichtung (11) oder eines Überdrucks des Kochbehälters (3) über einem maximalen, vorbestimmten Sicherheitsdruck beweglich ist.

6. Verfahren zum Kochen nach einem der Ansprüche 1 bis 5, wobei der hermetische Deckel (21) der Kocheinrichtung (1) konfiguriert ist, um so verriegelt zu werden, dass ein unbeabsichtigtes Öffnen durch einen Benutzer ab Anfang der ersten Kochphase bis zum Ende der zweiten Kochphase verhindert wird.

7. Verfahren zum Kochen nach einem der Ansprüche 1 bis 6, wobei die Kocheinrichtung (1) eine elektronische Steuerungsbaugruppe (23) beinhaltet, konfiguriert zum Steuern des Erwärmungselements (25) und der bistabilen Betätigungsvorrichtung (11).

8. Verfahren zum Kochen nach einem der Ansprüche 1 bis 7, wobei der Schritt der Durchführung der zweiten Kochphase von einem Schritt (E5) der Druckentlastung gefolgt wird, in dem der Verschluss (9) des Regulierungsmechanismus (5) des internen Drucks so in offener Position angeordnet wird, dass der Kochbehälter (3) auf Umgebungsdruck gebracht wird.

9. Verfahren zum Kochen nach Anspruch 8, wobei der Schritt (E5) der Druckentlastung von einem Schritt (E6) des Warmhaltens der Hülsenfrüchte in dem Kochbehälter (3) gefolgt wird, wobei der Verschluss (9) des Regulierungsmechanismus (5) des internen Drucks in der offenen Position vorliegt und der hermetische Deckel (21) so entriegelt ist, um von einem Benutzer geöffnet werden zu können.

10. Verfahren zum Kochen nach einem der Ansprüche 1 bis 9, wobei die Kocheinrichtung (1) weiter ein Widerstandselement (29), das in dem geschlossenen Kochbehälter (3) intern vorliegt, umfasst, wobei das Widerstandselement (29) konfiguriert ist, um bei der zweiten Kochphase eine zusätzliche Wärmequelle zu bieten.

## Claims

1. A method for cooking pulses, said pulses comprising a seed and a seed coat covering the seed body, **characterized in that** said method comprises the following steps:
- (E1) providing a pressure-cooking appliance (1) comprising a cooking chamber (3) suitable for being pressurized and a mechanism (5) for regulating the internal pressure of the cooking chamber (3), the regulating mechanism (5) comprising a channel (7) for venting excess pressure from the cooking chamber (3) and a obturator (9) that is movable between an open position in which the cooking chamber (3) is in fluid communication with the outside and a closed position in which this fluid communication is interrupted, the regulating mechanism (5) further comprising a bistable actuator (11) suitable for moving and holding the obturator (9) in the open or closed position,
- (E2) placing pulses inside the cooking chamber (3) by opening and then closing a hermetically sealing cover (21) of the cooking appliance (1), the hermetically sealing cover (21) being configured to allow access to the cooking chamber (3); then
- (E3) carrying out a first phase of cooking the pulses in the cooking chamber (3) by means of a heating element (25) of the cooking appliance (1) while keeping the hermetically sealing cover (21) closed, the regulating mechanism (5) being in the open position, and the cooking chamber (3) being maintained at a temperature below 100°C for a duration between 30 min and 60 min; then
- (E4) carrying out a second phase of cooking the pulses in the cooking chamber (5) by means of the heating element (25) while keeping the hermetically sealing cover (21) closed, the regulating mechanism (5) being in the closed position.

2. The cooking method according to claim 1, wherein the second cooking phase is carried out with an excess pressure in the cooking chamber (3) relative to the outside of between 30 and 120 kPa.

3. The cooking method according to any one of claims 1 or 2, wherein the bistable actuator (11) comprises an electromagnet (13) and a movable part (15) suitable for being moved by the electromagnet (13) between a first rest position and a second rest position so as to move the obturator (9) from its closed position to its open position and vice versa, and to hold it in either of these two positions.

4. The cooking method according to claim 3, wherein the bistable actuator (11) comprises a first element for holding the movable part (15) in its first rest position and a second element for holding the movable part (15) in its second rest position so that the movable part (15) remains in its first rest position or in its second rest position, respectively, when the electromagnet (13) is not energized.

5. The cooking method according to any one of claims 1 to 4, wherein the obturator (9) is a decompression ball arranged in a seat (19) formed in the venting channel (7) of the internal pressure regulating mechanism (5) so as to close the venting channel (7) when the obturator (9) is in its closed position, the decompression ball being movable under the effect of the bistable actuator (11) or an excess pressure in the cooking chamber (3) exceeding a predetermined maximum safety pressure.

6. The cooking method according to any one of claims 1 to 5, wherein the hermetically sealing cover (21) of the cooking appliance (1) is configured to be locked so as to prevent accidental opening by a user from the beginning of the first cooking phase to the end of the second cooking phase.

7. The cooking method according to any one of claims 1 to 6, wherein the cooking appliance (1) comprises an electronic control assembly (23) configured to control the heating element (25) and the bistable actuator (11).

8. The cooking method according to any one of claims 1 to 7, wherein the step of carrying out the second cooking phase is followed by a decompression step (E5) in which the obturator (9) of the internal pressure regulating mechanism (5) is arranged in the open position so as to bring the cooking chamber (3) to ambient pressure.

9. The cooking method according to claim 8, wherein the decompression step (E5) is followed by a step (E6) of keeping the pulses warm in the cooking chamber (3), the obturator (9) of the internal pressure regulating mechanism (5) being in the open position and the hermetically sealing cover (21) being unlocked so as to be openable by a user.

10. The cooking method according to any one of claims 1 to 9, wherein the cooking appliance (1) further comprises a resistive element (29) inside the closed cooking chamber (3), the resistive element (29) being configured to provide an additional heat source during the second cooking phase.
